# EUROPÄISCHE PATENTANMELDUNG

(11) **EP 2 612 720 A1**
(43) Veröffentlichungstag der Anmeldung: **10.07.2013**
(21) Anmeldenummer: 12150340.3
(22) Anmeldetag: 05.01.2012
(51) Int. Cl.: B23D 51/10, B23D 61/02

(54) **Sägeblatthalterung für auswechselbares Sägeblatt sowie Sägeblatt hierfür**

(71) Anmelder: BIAX Maschinen GmbH, 8212 Neuhausen am Rheinfall (CH)
(72) Erfinder: Baumann, Marco, 78239 Rielasingen (DE)
(74) Vertreter: Liebetanz, Michael

(57) **Zusammenfassung**

Die Sägeblatthalterung (10) für ein auswechselbares Sägeblatt (20), insbesondere für eine motorisch antreibbare Säge mit oszillierender Hubbewegung, hat einen Schlitz (30), der über eine Anlegefläche (31) verfügt, wobei durch die zwei Hälften (91, 92) eine durchgehende Bohrung (14) zur Anordnung eines Bolzens (40) vorgesehen ist und ein quer zur Hubbewegung erfolgendes Einführen des Sägeblatts (3) erlaubt. Das Sägeblatt (20) liegt mit der Sägekante (27) an der Anlegefläche (31) an und wird im Schlitz (30) durch den Bolzen (40) geklemmt. Eine Schelle (50) mit freien Enden (52, 53) wird um die beiden äusseren Seiten der Hälften (91, 92) auf die Sägeblatthalterung (20) gelegt. Durch Löcher (54) in der Schelle (50) wird der Bolzen (40) hindurchgeführt, wobei in dem Bereich der Sägeblatthalterung (20) unterhalb der Anlegefläche (31) eine Feder (60) angeordnet ist, die eine Verbindungsfläche (51) der Schelle (50) zwischen den freien Enden (52, 53) in einer Richtung quer zur Bolzenachse und quer zur Anlegefläche (31) vorspannt, so dass das Sägeblatt durch Kraftschluss und Formschluss in zwei quer zueinander ausgerichteten Richtungen gesichert ist. Vorteilhafterweise ist in der einen Hälfte (91) eine Öffnung (19) zur Aufnahme eines Stiftes (80) vorgesehen, der ein über die Länge der Öffnung (19) überstehendes Ende (81) aufweist, welches in der Benutzungsposition in den Schlitz (30) und in eine Sicke (70) des einzusetzenden Sägeblattes (20) ragt.

## Beschreibung

### TECHNISCHES GEBIET

Die vorliegende Erfindung betrifft eine Sägeblatthalterung für ein auswechselbares Sägeblatt nach dem Oberbegriff des Anspruchs 1 sowie ein Sägeblatt hierfür.

### STAND DER TECHNIK

Eine solche Sägeblatthalterung und ein solches Sägeblatt sind jeweils aus der EP 2 067 557 bekannt.

Aus der US 4,294,013 ist insbesondere ein Formschluss zwischen einem Sägeblatt und einer Sägeblatthalterung bekannt. Bei anderen bekannten Sägen, beispielsweise bei der aus der DE 198 50 689 bekannten Säge wird das Sägeblatt ausschliesslich durch eine Klemmung, also durch einen Kraftschluss, in der Sägeblatthalterung befestigt. Daher kann es bei nicht ausreichendem Anziehen der Befestigungsschraube oder einem durch Vibrationen bedingten Lösen der Befestigungsschraube passieren, dass das Sägeblatt aus seiner Halterung herausfällt, woraus sich eine Verletzungsgefahr ergibt.

Durch das Vorsehen eines Formschlusses wie bei der EP 2 067 557 wird diese Gefahr verringert.

### DARSTELLUNG DER ERFINDUNG

Ausgehend von diesem Stand der Technik besteht die Aufgabe der Erfindung in der Angabe einer Sägeblatthalterung und eines Sägeblatts, mit denen jeweils ein besonders einfaches Auswechseln des Sägeblatts möglich ist, welches eine Sicherung des Sägeblatts gegen ein Herausrutschen aus der Sägeblatthalterung in Folge einer Lockerung seiner Befestigung realisiert, und die darüber hinaus eine präzise definierte Lage und spielfreie Halterung des Sägeblatts in der Sägeblatthalterung gewährleistet.

Diese Aufgabe wird für eine Sägeblatthalterung gemäss dem Stand der Technik durch die Merkmale des Anspruchs 1 und für ein Sägeblatt gemäss dem Stand der Technik durch die Merkmale des Anspruchs 9 gelöst.

Die Sägeblatthalterung für ein auswechselbares Sägeblatt, insbesondere für eine motorisch antreibbare Säge, bei der das Sägeblatt eine oszillierende Hubbewegung ausführt, hat der vordere Abschnitt der Sägeblatthalterung einen Schlitz, der die Sägeblatthalterung in zwei Hälften teilt. Der Schlitz ist in einer zur Hubbewegung parallelen Richtung und in einer dazu quer liegenden Richtung offen und verfügt in der quer liegenden Richtung über eine Anlegefläche, wobei durch die zwei Hälften eine durchgehende Bohrung zur Anordnung eines Bolzens vorgesehen ist, und ein quer zur Hubbewegung erfolgendes Einführen des Sägeblatts erlaubt. Der Bolzen wirkt mit einem quer zu einer Sägekante des Sägeblatts verlaufenden Einschnitt zusammen, um ein Schwenkgelenk zu bilden, das ein um den Bolzen herum erfolgendes Verschwenken des Sägeblatts gestattet. Das Sägeblatt liegt mit der Sägekante an der Anlegefläche an, wobei der Bolzen in dem Schlitz ein in diesem eingeführtes Sägeblatt zu klemmen. Dabei ist eine Schelle vorgesehen, die über freie Enden verfügt, die von beiden äusseren Seiten der Hälften auf die Sägeblatthalterung legbar ist. Die Schelle verfügt in den freien Enden über Löcher, die zur Hindurchführung des Bolzens ausgestaltet sind, wobei in dem Bereich der Sägeblatthalterung unterhalb der Anlegefläche eine Feder angeordnet ist, die eine Verbindungsfläche der Schelle zwischen den freien Enden in einer Richtung quer zur Bolzenachse und quer zur Anlegefläche vorspannt, so dass das Sägeblatt durch Kraftschluss und Formschluss in zwei quer zueinander ausgerichteten Richtungen gesichert ist.

Vorteilhafterweise weist die Sägeblatthalterung in der einen Hälfte mindestens eine parallel zur Bohrung angeordnete Öffnung zur Aufnahme eines Stiftes auf, wobei der Stift die Länge der Öffnung hat und einen über diese Länge überstehendes, insbesondere abgerundetes, Ende aufweist, welches in der Benutzungsposition in den Schlitz ragt und in eine Sicke des einzusetzenden Sägeblattes ragt. Damit kann ein einfach herzustellenden Formschluss quer zur Bewegungsrichtung beim Sägen hergestellt werden, der trotzdem das Einsetzen und Entfernen des Sägeblatte nicht ungebührlich erschwert.

Das Federmittel ist bevorzugt eine Druckfeder ist, die auf der von der Anlegefläche wegweisenden Seite der Sägeblatthalterung zwischen dieser und dem Verbindungsjoch der freien Schellenenden angeordnet ist, insbesondere in einer Richtung quer zur Bolzenachse und quer zur Anlegefläche, mit anderen Worten das Verbindungsjoch der Schelle weg von der Anlegefläche zieht und damit mit dem quer verlaufenden Bolzen das eingeführte Sägeblatt sicher auf der Anlegefläche fixiert.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsdarstellung eines Ausführungsbeispiels einer Sägeblatthalterung und eines Sägeblattes nach der Erfindung;
- Fig. 2: eine teilweise geschnittene Darstellung eines Einsetzens des Sägeblattes nach Fig. 1 in die Sägeblatthalterung nach Fig. 1;
- Fig. 3: Ausführungsbeispiel nach Fig. 1 im Betriebszustand;
- Fig. 4: eine Querschnittsansicht der Sägeblatthalterung nach Fig. 1 in der Ebene durch einen Stift; und
- Fig. 5: eine Querschnittsansicht der Sägeblatthalterung nach Fig. 1 in der Ebene durch eine Schraube.

### BESCHREIBUNG BEVORZUGTER AUSFÜHRUNGSFORMEN

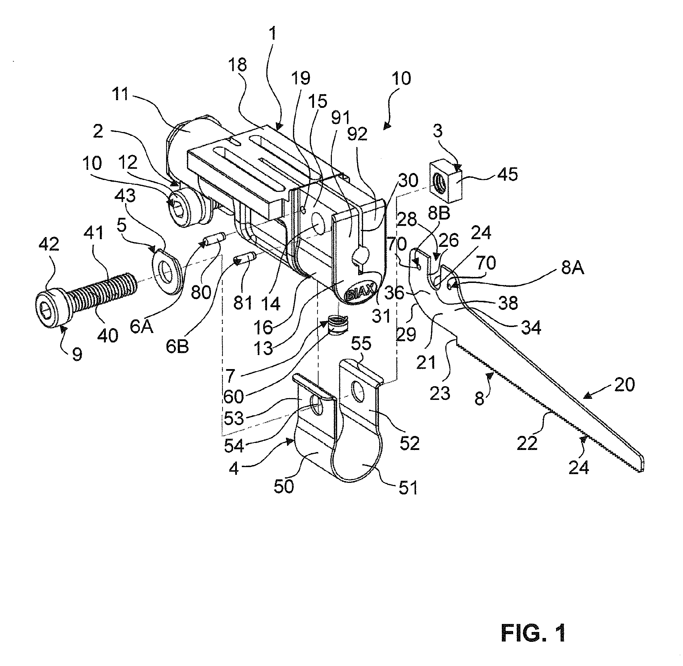

Fig. 1 zeigt eine Sägeblatthalterung 10 und ein Sägeblatt 20. Die Sägeblatthalterung 10 wird im hinteren Bereich des Körpers 11 mit der Schraube 12 an dem in den Zeichnungen nicht dargestellten Antrieb und Handgriff befestigt. Der Antrieb kann über einen Wellenstumpf aufgeschoben werden. Das Antriebsglied ist Teil eines in der Hand zu haltenden Werkzeugs und wird durch eine in dem Werkzeug vorgesehene Antriebseinrichtung motorisch, insbesondere pneumatisch, derart angetrieben, dass es eine oszillierende Hubbewegung ausführt. Die Sägeblatthalterung 10 wird im Gehäuse des Werkzeugs mittels der Führungsrippen 18 geführt.

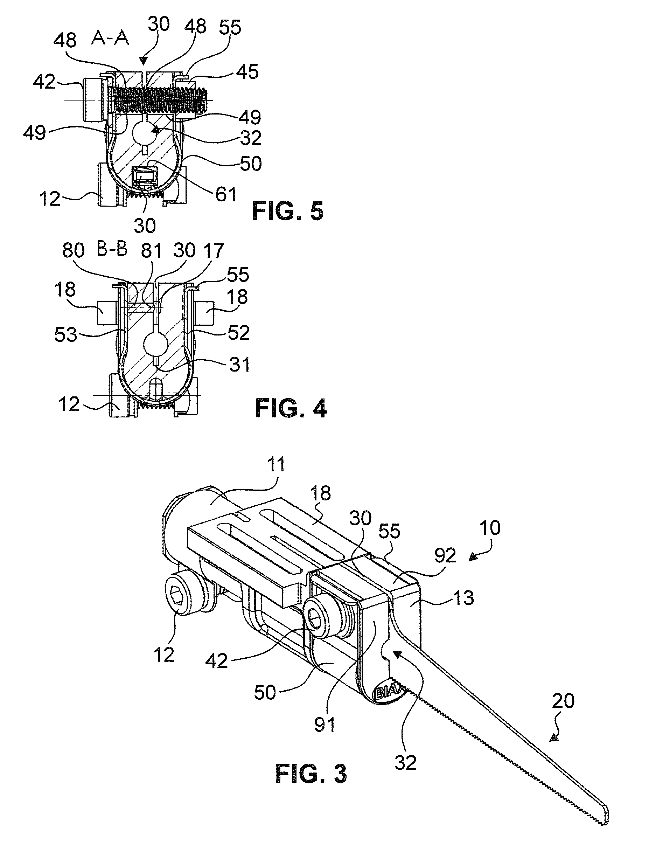

Das gegenüberliegende vordere Ende der Sägeblatthalterung 10 weist eine senkrecht zur Bewegungsrichtung der Säge vorgesehene Vorderwand 13 auf. In diesem vorderen Ende ist ein in Bewegungsrichtung der Säge angeordneter Schlitz 30 vorgesehen, der zur Aufnahme des Sägeblattes 20 dient. Die beiden durch den Schlitz 30 entstandenen Hälften 91 und 92 des vorderen Endes der Sägeblatthalterung 10 weisen quer durch sie hindurch verlaufende Öffnungen 14 auf, von denen in der Fig. 1 nur die vordere zu sehen ist. Durch diese Öffnungen 14 wird eine Schraube 40 gesteckt, deren Ende mit einem Aussengewinde 41 versehen ist, das mit einer hinter der anderen Hälfte 92 angeordneten Schraubenmutter 45 zusammenwirkt. Die im Querschnitt kreisförmigen Öffnungen 14 in den beiden Hälften 91 und 92 weisen einen Durchmesser auf, der grösser ist als der Bolzendurchmesser der Schraube. Dies ist in dem Querschnitt der Fig. 5 zu erkennen, wo das Schraubengewinde 41 an der oberen Rundung 48 in den beiden Hälften 91 und 92 anliegt und einen Abstand von der unteren Rundung 49 der Öffnung 14 aufweist.

In der einen Hälfte 91 der Sägeblatthalterung 10 sind durch diese hindurchführende, parallel zu der Öffnung 14 liegende Bohrungen 19 angeordnet. Diese Bohrungen 19 sind auf einer Linie parallel in Bezug auf die Richtung der Anlegefläche 31 angeordnet und befinden sich in einer Höhe und Abstand von der Öffnung 14, dass sie dem Ort der Sicken 70 in dem Sägeblatt 20 entsprechen, wenn das Sägeblatt 20 in die Sägeblatthalterung 10 eingesetzt ist, wobei die Sicken 70 im wesentlichen mittig der dortigen Abschnitte 36 und 38 neben dem Einschnitt 28 vorgesehen sind.

Mit dem Bezugszeichen 70 sind sogenannte Sicken am Sägeblatt 20 bezeichnet, die einen leicht gespannten Sitz des Sägeblattes 20 im Schlitz 30 bewirken. Die punktförmigen Sicken 70 sind auf der einen Seite des Sägeblattes 20 eine Einbuchtung und auf der gegenüberliegenden Seite eine Ausbuchtung. Die Sicken 70 sind vorzugsweise mittig in den beiden Schenkel 34 und 36 in Längsrichtung und mittig in der Höhe bezüglich dem oberen Rand und dem gerundeten Boden 38 angeordnet.

Gegenüber den Bohrungen 19 der Hälfte 91 sind in der anderen Häfte 92 der Sägeblatthalterung 10 Einbuchtungen 17 vorgesehen, die in ihrer Form komplementär zu den Sicken 70 des Sägeblattes 20 sind.

In die Öffnungen 19 sind Stahlstifte 80 einsetzbar, die eine zylindrische Länge aufweisen, die der Länge der Öffnung 19 entsprechen. Die Gesamtlänge der zwei Stahlstifte 80 ist um die runden Enden 81 an dem einen Ende verlängert. Die Stahlstifte 80 sind in den Öffnungen 19 so eingesetzt, dass bei bündigem Abschluss auf der äusseren Seite der Hälfte 91 die runden Enden 81 in den Schlitz 30 hineinragen. Wenn dann das Sägeblatt 20 eingesetzt ist, dann werden die runden Enden 81 in die Öffnung 19 zurückgedrückt und das Einschieben des Sägeblattes 20 ist mit einem Widerstand verbunden, bis die Sicke 70 in die Einbuchtung 17 zu liegen kommt. Dann können mit der von der Seite aufliegenden Schelle 50 die Stahlstifte 80 in die Öffnungen 19 gedrückt werden, so dass sich über diese Verbindung Schelle 50 - Stift 80 - abgerundetes Ende 81 - Sicke 70 - Einbuchtung 17 - Hälfte 92 und gegenüberliegender Teil der Schelle 50 ein effektiver Formschluss ergibt.

Natürlich kann die Positionierung der Öffnungen 19 und Ausbuchtungen 17 auch in der anderen Hälfte 92 vorgesehen sein. Dann ist auch die Sicke 70 im Sägeblatt 20 auf die andere Seite des Sägeblattes 20 hin zu orientieren.

Die seitlichen Oberflächen 15 auf beiden Seiten, die die Öffnungen 14 aufweisen, sind zur vorderen Wand 13 und zum rückwärtigen Körper etwas zurückgesetzt, um die besagte Schelle 50 aufzunehmen. Die Schelle 50 ist U-förmig und weist einen mittleren Boden 51 auf, an den sich zwei im wesentlichen identische freie Enden 52 und 53 anschliessen. Quer durch die freien Enden 52 und 53 ist jeweils eine Öffnung 54 vorgesehen, durch die die Schraube 40 hindurchführbar ist, vorzugsweise auf der Seite des Schraubenkopfes 42 zuvor durch eine Unterlegschreibe 43.

Die untere Fläche 16 des vorderen Endes zwischen den zurückgesetzten Flächen 15 ist gerundet mit einem Radius, der dem Radius des runden Bodens 51 der Schelle 50 entspricht. Die Öffnungen 54 der Schelle 50 entsprechen den Öffnungen 14 durch den Körper der Sägeblatthalterung 10 sind aber im Durchmeser kleiner ausgelegt, so dass der Schraubenkörper 41 im wesentlichen ohne viel Spiel hindurchpasst. Mit anderen Worten, bei durch die Öffnungen 54 der Schelle 50 hindurchgeführter Schraube 40 entspricht die Position des Schraubenkörpers 41, welche sich an die Tiefe 38 des Einschitts 28 anlegt auch der Positionierung der Tiefe des Bodens 51 der Schelle 50 entspricht.

In dem gegenüber dem Boden 15 liegenden Berich der Sägeblatthalterung 10 ist eine Öffnung vorgesehen, die ein Sackloch ist; also mit anderen Worten nicht bis auf den Schlitz 30 durchgängig ist, jedenfalls nicht in dem Sinne, dass nicht eine Feder 60 Abstützung findet. Die Druckfeder 60 ist in dem Sackloch eingesetzt und stützt sich zum einen auf dem Boden 61 des Sacklochs und auf der anderen Seite auf dem Boden 51 der Schelle 50 ab, wie es in der Fig. 5 zu erkennen ist.

Beim Anziehen der Schraube 40 werden die beiden Hälften 91 und 92 des vorderen Endes der Sägeblatthalterung 10 so zusammengezogen, dass das in den Schlitz 30 eingesetzte hintere Ende 21 des Sägeblattes 20 dazwischen grossflächig festgeklemmt wird. Zu diesem Kraftschluss tritt noch, wie oben und weiter unten erläutert wird, ein über die Schelle 50 und die dazwischen liegenden Elemente 80, 81, 70, 17 vermittelter Formschluss hinzu. Beim Festziehen der Schraube 40 wird die Schraubenmutter 45 gegen ein Mitdrehen durch den nach aussen überstehenden rechteckigen Rand 55 der Schelle 50 festgehalten. Wenn die Öffnung 54 in der Schelle in Längsrichtung mittige angeordnet ist, kann die Schelle 50 in beiden Orientierungen eingesetzt werden, so dass der überstehende rechteckige Rand 55 der Schelle 50 auf beiden freien Enden 52 und 53 vorgesehen sind. Die Länge des Bolzens wird in diesem Ausführungsbeispiel über einen Schraubenkopf 42 und die Mutter 45 verändert. Eine Spannvorrichtung kann in anderen Ausführungsformen auch eine Bolzenverriegelung und einen Bajonettspanner umfassen, mit dem das Sägeblatt 20 in dem Schlitz 30 verspannt wird.

An eine mit Sägezähnen 22 versehene Sägekante 27 des Sägeblatts 20 schliesst sich ein Absatz 23 an, an den sich wiederum eine Kante 25 anschliesst. Im eingesetzten Zustand liegt die Kante 25 des Sägeblattes 20 auf der Anlegefläche 31 auf, die den Grund des Schlitzes 30 im vorderen Ende der Sägeblatthalterung 10 bildet, während der Absatz 23 an der vorderen Fläche 13 der Sägeblatthalterung 10 anliegt. Diese Auflage und Anlage legt das Sägeblatt 20 im Schlitz 30 in einer präzise definierten Position fest.

Das Sägeblatt 20 weist ferner einen quer zur Richtung der Hin- und Herbewegung des Sägeblatts 20 mit zwei Kanten 24 und 26 verlaufenden Einschnitt 28 auf, von denen die hintere Kante 24 im eingesetzten Zustand als Sicherungskante an der Schraube 40 anliegt und das Sägeblatt 20 im Falle einer Lockerung der Klemmung gegen eine Bewegung nach vorne sichert. Die beiden Schenkel 34 und 36 ergeben eine grosse Klemmfläche. Die Abmessungen sind so gewählt, dass bei eingesetzter Schraube 40 das Sägeblatt 20 nur in einem gegenüber der Richtung der Hin- und Herbewegung verschwenktem Zustand zwischen Schraube 40 und Anlegefläche 31 eingefädelt werden kann.

Die Sägeblatthalterung 10 ist also dazu eingerichtet, eine oszillierende Hubbewegung auszuführen, wobei das Sägeblatt 20 sowohl in Richtung der oszillierenden Hubbewegung als auch quer dazu formschlüssig gehalten wird. Der quer zur Richtung der Hubbewegung wirksame Formschluss ergibt sich durch die Wände des Schlitzes 30. Der in Richtung der Hubbewegung wirkende Formschluss erfolgt durch die wenigstens eine Schraube 40, die quer zur Richtung der Hubbewegung angeordnet ist und im Zusammenwirken mit wenigstens einer Kante 24 und 26 des Sägeblatts 20 eine zur Hubbewegung parallele Relativbewegung zwischen Sägeblatt 20 und Sägeblatthalterung 10 sperrt.

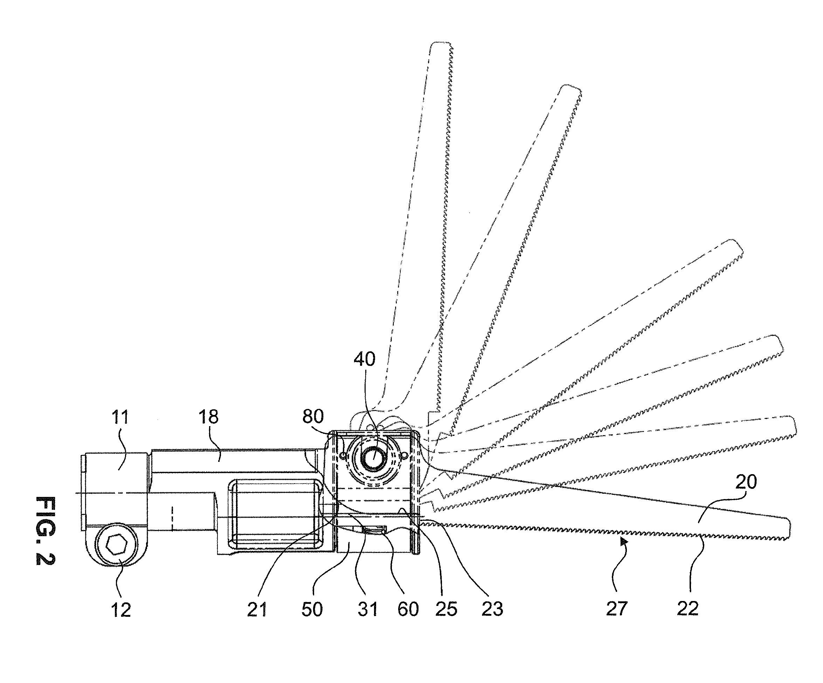

Die Sägeblatthalterung 10 zeichnet sich dadurch aus, dass der Schlitz 30 in einer zur Richtung der Hubbewegung parallelen Richtung und in einer dazu und zur Anordnung der Schraube 40 quer liegenden Richtung offen ist. In der Darstellung der Fig. 1 ist der Schlitz 30 nach vom, also in Richtung der Hubbewegung, und nach oben und damit quer zur Richtung der Hubbewegung offen. Durch diese Ausgestaltung erlaubt der Schlitz 30 ein quer zur Hubbewegung erfolgendes Einführen des Sägeblatts 20, wie es in der Fig. 2 dargestellt ist. Dort stellt die durchgezogen gezeichnete Stellung des Sägeblattes 20 eine Arbeitsposition dar, in der das Sägeblatt 20 parallel zur Bewegungsrichtung ausgerichtet ist, während die gestrichelten Darstellungen Zwischenstellungen repräsentieren, die das Sägeblatt 20 beim quer zur Bewegungsrichtung erfolgenden Einsetzen in die Sägeblatthalterung 10 oder Herausnehmen aus der Sägeblatthalterung 10 einnimmt.

Der vordere Abschnitt ist teilweise ausgeschnitten dargestellt, so dass die Anlegefläche 31 zu sehen ist, auf der der flache Abschnitt 25 der Unterkante des Sägeblatts 20 vor dem Absatz 23 ruht. Die Tiefe des Schlitzes 30 mit der Anlegefläche 31 ist lang genug, dass der gerundete Kantenabschnitt des hinteren Endes 21 des Sägeblattes frei ist.

Die Schraube 40 ist durch ihre Anordnung und ihren Durchmesser dazu eingerichtet, im Zusammenwirken mit einem quer zu der Sägekante 22 des Sägeblatts 20 verlaufenden Einschnitt 28 in dem Sägeblatt 20 ein Schwenkgelenk zu bilden, das ein um die Schraube 40 herum erfolgendes Verschwenken des Sägeblatts 20 erlaubt. Die Schwenkbewegung wird durch die verschiedenen Schwenkstellungen in der Fig. 2 dargestellt.

Entsprechend ist das Sägeblatt 20 dazu eingerichtet, in der Sägeblatthalterung 10 in Richtung der oszillierenden Hubbewegung formschlüssig gehalten zu werden, wobei der in Richtung der Hubbewegung wirkende Formschluss durch die wenigstens eine Schraube 40 vermittelt wird, die quer zur Hubbewegung in der Sägeblatthalterung 10 angeordnet ist und die im Zusammenwirken mit wenigstens einer Kante 24 und 26 des in der Sägeblatthalterung 10 liegenden Sägeblatts 20 eine zur Richtung der Hubbewegung parallele Relativbewegung zwischen Sägeblatt 20 und Sägeblatthalterung 10 sperrt.

Zusätzlich ist das Sägeblatt 20 auch dazu eingerichtet, in der Sägeblatthalterung 10 in Richtung quer zu der oszillierenden Hubbewegung formschlüssig gehalten zu werden, indem durch das Anziehen der Schraube 40 die Stahlstifte 80 über die durch die Schelle 50 vermittelte Positionierung der runden Enden 81 in den Sicken 70 einen quer wirkenden Formschluss sicherstellen.

Das Sägeblatt 20 zeichnet sich dadurch aus, dass die Kante 24 und 26 einen quer zu der Sägekante 27 des Sägeblatts 20 verlaufenden Einschnitt 28 im Sägeblatt 20 begrenzt, der durch seine Anordnung und Abmessungen dazu eingerichtet ist, im Zusammenwirken mit der Schraube 40 ein Schwenkgelenk zu bilden, das ein um die Schraube 40 herum erfolgendes Verschwenken des Sägeblatts 20 erlaubt.

Die Sägeblatthalterung 10 und das Sägeblatt 20 stellen damit miteinander in Beziehung stehende Erzeugnisse dar, deren Abmessungen aneinander angepasst sind.

In einer bevorzugten Ausgestaltung ist die Sägeblatthalterung 10 dazu eingerichtet, ein um die Schraube 40 herum erfolgendes Verschwenken des Sägeblatts 20 in die Arbeitsposition zu erlauben, in der die Sägekante 27 parallel zur Richtung der oszillierenden Hubbewegung ausgerichtet ist. Dabei spürt der Benutzer das Erreichen der richtigen Position durch den sich vermindernden Widerstand der auf der Innenwand der Seite 92 des Schlitzes 30 anliegenden Erhöhungen der Sicken 70. Demgegenüber verspürt der Benutzer bei zunehmendem Verschwenkungswinkel vorteilhafterweise ein Aufsetzen der hinteren gerundeten Kante 21 des Sägeblattes 30 auf der Anlegefläche 31, bis zum Anschlag der Kante 25 auf der Anlegefläche 31, wie der Abstand zwischen der unteren Kante 25 und der Tiefe 38 der halbkreisförmigen Rundung grösser und länger ist als der Abstand von der Anlegefläche 31 bis zur Unterkante der Löcher 14 in den beiden Hälften. Diese Öffnungen 14 sind im Durchmesser grösser (oder entsprechende Langlöcher) als der Durchmesser des durchzuführenden Bolzens 40, so dass der Bolzen 40 ohne eingeführtes Sägeblatt 20 durch die Schelle 50 am Anlegefläche-seitigen Ende der Öffnungen 14 anliegt und durch das Verschwenken des eingelegten Sägeblattes 20 von diesem Ende/Boden abgehoben und gegen die weiter unten genannte Feder 60 verspannt wird.

Die Schraube 40 stellt eine Ausgestaltung eines Bolzens dar, der im Zusammenwirken mit einem entsprechend gestalteten Sägeblatt ein Schwenkgelenk bildet. Bei dieser Ausgestaltung ist die Mutter 45 dazu eingerichtet, mit der in die Sägeblatthalterung 10 eingesteckten Schraube 40 verschraubt zu werden und im angezogenen Zustand der resultierenden Schraubverbindung das Sägeblatt 20 in der Sägeblatthalterung 10 zu klemmen und/oder die Schraube 40 gegen ein Herausfallen aus der Sägeblatthalterung 10 zu sichern.

Eine alternativ bevorzugte Ausgestaltung sieht vor, dass der Bolzen ein gewindeloser Bolzen ist. Bei dieser Ausgestaltung ist ferner bevorzugt, dass der Bolzen an einem Ende einen Kopf 42 aufweist, der in radialer Richtung über den Bolzen hinaus ragt und dass das gegenüberliegende Ende des Bolzens dazu eingerichtet ist, einen Sicherungsring oder einen Sicherungsstift aufzunehmen, der den Bolzen gegen ein Herausfallen aus der Sägeblatthalterung 10 sichert. Die Aufnahme des Bolzens in der Sägeblatthalterung 10 ist dann ferner so dimensioniert, dass ihr Durchmesser grösser als der Durchmesser des Bolzens aber kleiner als der Durchmesser des Kopfes des Bolzens ist. Bevorzugt ist auch, dass der Bolzen und/oder der Sicherungsring oder Sicherungsstift eine Schräge aufweist, die so angeordnet ist, dass sie bei einem radial erfolgenden Einsetzen des Sicherungsrings oder des Sicherungsstifts in das zugehörige Ende des Bolzen eine Axialkraftkomponente erzeugt, mit der das Sägeblatt in der Sägeblatthalterung 10 geklemmt wird.

Bevorzugt ist auch, dass die Sägeblatthalterung 10 einen Anschlag aufweist, der ein über die Arbeitsposition hinausgehendes Verschwenken des Sägeblatts 20 verhindert. Der Anschlag ergibt sich in einer Ausgestaltung dadurch, dass die Kante 25 des Sägeblattes 20 im eingesetzten Zustand auf der in Fig. 1 referenzierten Anlegefläche 31 aufliegt, während der Absatz 23 an der vorderen Fläche 13 des Endes der Sägeblatthalterung 10 anliegt.

Eine bevorzugte Ausgestaltung des Sägeblatts 20 zeichnet sich dadurch aus, dass der Einschnitt 28 durch eine halbkreisförmige Rundung 38 zwischen den Seitenkanten 24 und 26 begrenzt ist, die in der Arbeitsposition des Sägeblatts 20 an der Schraube 40 anliegt und dass ein Sägeblatthalterung-seitiges Ende 29 des Sägeblatts 20 eine konzentrisch zur halbkreisförmigen Rundung 38 des Einschnitts 28 verlaufende Rundung aufweist, deren Radius gleich dem in der Arbeitsposition des Sägeblatts 20 herrschenden Abstand des Mittelpunktes des durch die Rundung 38 des Einschnittes 28 definierten Halbkreises von der Anlegefläche 31 ist.

Die den Einschnitt 28 begrenzende Kanten 24 und 26 sind senkrecht zur Sägekante 27 und verlaufen damit bei in die Arbeitsposition innerhalb der Sägeblatthalterung 10 geschwenktem Sägeblatt 20 auch senkrecht zur Richtung der oszillierenden Hubbewegung.

Eine weitere bevorzugte Ausgestaltung des Sägeblatts 20 zeichnet sich dadurch aus, dass der Einschnitt 28 zwei parallel verlaufende Kanten 31 und 26 und eine halbkreisförmige Rundung 38 zur Anlage an der Schraube 40 aufweist und dass ein Sägeblatthalterung-seitiges Ende des Sägeblatts 20 eine konzentrisch zur halbkreisförmigen Rundung 38 verlaufende Rundung aufweist, deren Radius gleich dem Abstand des Mittelpunktes der Rundung 38 des Einschnitts 28 von einer Unterkante 25 des Sägeblattes 20 ist.

Die Unterkante 25 stösst im montierten Zustand an der Oberkante der Anlegefläche 31 am Grund des Schlitzes 30 an. Dies geschieht mit einer gewissen Spannung, die durch die Feder 60 erzeugt wird, die sich auf dem Boden 61 des Sacklochs abstützt, gegen den Boden 51 der Schelle drückt und somit die durch die Öffnungen 54 reichende Schraube 40 in Richtung der Feder 60 und somit auf den Boden der Anlegefläche 31 zieht.

Das Einfädeln des Sägeblattes 20 in den Schlitz 30 bei eingesetzter Schraube 40 erfolgt durch Verschwenken des Sägeblattes 20 gemäss Fig. 2 (vgl. die strichpunktiert eingezeichneten Zwischenstellungen), ist jedoch nur möglich, wenn auch das vordere Ende 29 des Sägeblattes 20 mit diesem Radius gerundet ist.

Der Absatz 23 der Unterkante 25 des Sägeblattes 20 liegt im eingesetzten Zustand an der Vorderfläche 13 des vorderen Endes der Sägeblatthalterung 10 an und bildet damit einen Anschlag, der eine Arbeitsposition des Sägeblatts 20 in der Sägeblatthalterung 10 definiert.

Die Fig. 4 zeigt eine Querschnittsansicht der Sägeblatthalterung 10 nach Fig. 1 in der Ebene durch den gegenüber der Vorderseite 13 weiter entfernten Stift 80 und die Fig. 5 eine weitere Querschnittsansicht der Sägeblatthalterung 10 in der Ebene der Schraube 40. Diese zeigen somit das Anschmiegen der Schelle 50 mit dem gerundeten Ende an den komplementären unteren Abschnitt der Sägeblatthalterung 10 und die beiden flachen freien Enden 52 und 53 bis zum überstehenden Rand 55. Der dargestellte Stift 80, wie auch der andere Stift 80, sitzt in der Öffnung 19 bis zur Anlage an der inneren Schellenfläche 53 und ragt mit seinem abgerundeten Ende 81 in die Einbuchtung der Sicke 70, deren gegenüberliegende Ausbuchtung in die komplementäre Ausnehmung in der Hälfte 92 ragt. Bei gelöster Schraube 40 wird das Sägeblatt 20 in den Schlitz 30 von oben quer eingeführt und in Bewegungsrichtung wird der Einschnitt auf den Schraubenbolzen 41 aufgeschoben, dann wird das Sägeblatt 20 um die durch die Achse des Schraubenbolzens 41 gebildete Drehachse gedreht, dass die Sägekante 27 in Richtung der Bewegungsrichtung der Säge ausgerichtet wird. Dabei dreht die Unterseite 21 mit der Unterkante 25 um den zwischen den Hälften 91 und 92 ausgenommenen Schlitz 30, wobei durch die durch die Feder 60 ausgeübten ständigen Druck auf den Schraubenbolzen 40 diese Unterkante 25 des Sägeblattes 20 in einer vorgespannten Lage gegen den Boden 31 des Schlitzes zu liegen kommt. In dieser vorbestimmten Lage und Position wird das Sägeblatt 20 dann durch das Anziehen der Schraube 40 oder der alternativen Befestigung, wie einem Bajonettverschluss formschlüssig festgelegt, wobei die in das Sägeblatt 20 eingreifenden Stahlstifte 80 dieses ebenfalls unterstützen. Dadurch, dass die Stahlstifte 80 nur in die Sicken 70 hineinragen, die mit ihrer Ausbuchtung in den Körper der Halterungshälfte 92 reichen, kann das Sägeblatt 20 nach dem Lösen der Schraube 40 in einfacher Weise wieder entfernt werden, da durch die abgerundeten Enden 81 das Sägeblatt 20 alleine durch Herausziehen gegen eine höhere Kraft aus den Sicken 70 freigeben.

### BEZUGSZEICHENLISTE

- 10: Sägeblatthalterung
- 11: Körper
- 12: Schraube
- 13: Vorderwand
- 14: Öffnungen
- 15: seitliche Oberfläche
- 16: untere Fläche
- 17: Einbuchtung
- 18: Führungsgrippe
- 19: Bohrung für Stift
- 20: Sägeblatt
- 21: hinteres Ende
- 22: Sägezahn
- 23: Absatz
- 24: Kante
- 25: Kante
- 26: Kante
- 27: Sägekante
- 28: Einschnitt
- 29: Sägeblatthalterung-seitiges Ende
- 30: Schlitz
- 31: Anlegefläche
- 32: zylindrische Öffnung

- 34: Schenkel
- 36: Schenkel
- 38: halbkreisförmige Rundung
- 40: Schraube
- 41: Aussengewinde
- 42: Schraubenkopf
- 43: Unterlegscheibe
- 45: Schraubenmutter
- 48: oberer Boden
- 49: unterer Boden
- 50: Schelle
- 51: mittlerer Boden
- 52: freies Ende
- 53: freies Ende
- 54: Öffnung
- 55: Schellenrand
- 60: Feder
- 61: Boden des Sacklochs
- 70: Sicke
- 80: Stift
- 81: abgerundete Spitze
- 91: Hälfte des Halterungskörpers
- 92: Hälfte des Halterungskörpers

## Patentansprüche

1. Sägeblatthalterung (10) für ein auswechselbares Sägeblatt (20), insbesondere für eine motorisch antreibbare Säge, bei der das Sägeblatt (20) eine oszillierende Hubbewegung ausführt, wobei der vordere Abschnitt der Sägeblatthalterung (10) durch einen Schlitz (30) in zwei Hälften (91, 92) geteilt ist, wobei der Schlitz (30) in einer zur Hubbewegung parallelen Richtung und in einer dazu quer liegenden Richtung offen ist und in der quer liegenden Richtung über eine Anlegefläche (31) verfügt, wobei durch die zwei Hälften (91, 92) eine durchgehende Bohrung (14) zur Anordnung eines Bolzens (40) vorgesehen ist, und ein quer zur Hubbewegung erfolgendes Einführen des Sägeblatts (3) erlaubt, wobei der Bolzen (40) durch seine Anordnung und seinen Durchmesser dazu eingerichtet ist, im Zusammenwirken mit einem quer zu einer Sägekante (27) des Sägeblatts (20) verlaufenden Einschnitt (28) in dem Sägeblatt (20) ein Schwenkgelenk zu bilden, das ein um den Bolzen (40) herum erfolgendes Verschwenken des Sägeblatts (20) gestattet, wobei das Sägeblatt (20) mit der Sägekante (27) an der Anlegefläche (31) anliegt, wobei der Bolzen (40) mit einer Spannvorrichtung (42, 45) versehen ist, um die Hälften (91, 92) auf den Schlitz (30) hin zu bewegen, um in diesem ein eingeführtes Sägeblatt (20) zu klemmen, **dadurch gekennzeichnet, dass** eine Schelle (50) vorgesehen ist, die über freie Enden (52, 53) verfügt, die von beiden äusseren Seiten der Hälften (91, 92) auf die Sägeblatthalterung (20) legbar ist, dass die Schelle (50) in den freien Enden über Löcher (54) verfügt, die zur Hindurchführung des Bolzens (40) ausgestaltet sind, und dass in der Sägeblatthalterung (20) ein gegen die Schelle (50) wirkendes Federmittel (60) vorgesehen ist, mit dem eine den Bolzen (40) in Richtung der Anlegefläche (31) vorspannende Federkraft erzeugbar ist.

2. Sägeblatthalterung (10) nach Anspruch 1, **dadurch gekennzeichnet, dass** in der einen Hälfte (91) mindestens eine parallel zur Bohrung (14) angeordnete Öffnung (19) zur Aufnahme eines Stiftes (80) vorgesehen ist, wobei der Stift (80) die Länge der Öffnung (19) hat und einen über diese Länge überstehendes, insbesondere abgerundetes, Ende (81) aufweist, welches in der Benutzungsposition in den Schlitz (30) ragt und in eine Sicke (70) des einzusetzenden Sägeblattes (20) ragt.

3. Sägeblatthalterung (10) nach Anspruch 2, **dadurch gekennzeichnet, dass** in der der Öffnung (19) gegenüberliegenden Position der anderen Hälfte (92) eine Ausnehmung (17) vorgesehen ist, in die in der Benutzungsposition eine Ausbuchtung der Sicke (70) des einzusetzenden Sägeblattes (20) ragt.

4. Sägeblatthalterung (10) nach Anspruch 2 oder 3, **dadurch gekennzeichnet, dass** die Fläche des freien Endes (53) der Schelle (50) in der Benutzungsposition die Öffnung (19) der einen Hälfte (91) bündig abschliesst.

5. Sägeblatthalterung (20) nach einem der Ansprüche 1 bis 4, **dadurch gekennzeichnet, dass** das Federmittel eine Feder (60) ist, die auf der von der Anlegefläche (31) wegweisenden Seite der Sägeblatthalterung (20) zwischen dieser und dem Verbindungsjoch (51) der freien Schellenenden (52, 53) angeordnet ist, insbesondere in einer Richtung quer zur Bolzenachse und quer zur Anlegefläche (31).

6. Sägeblatthalterung (10) nach Anspruch 5, **dadurch gekennzeichnet, dass** in dem Bereich unter der Anlegefläche (31) in der die Achse der Bohrungen (14) aufweseienden Ebene von aussen ein Sackloch zur Aufnahme der Feder (60) vorgesehen ist.

7. Sägeblatthalterung (10) nach Anspruch einem der Ansprüche 1 bis 6, **dadurch gekennzeichnet, dass** die Spannvorrichtung (42, 45) einen Schraubenkopf (42) und eine Schraubenmutter (45) umfasst.

8. Sägeblatthalterung (10) nach einem der Ansprüche 1 bis 6, **dadurch gekennzeichnet, dass** die Spannvorrichtung eine Bolzenverriegelung und einen Bajonettspanner umfasst.

9. Sägeblatt (20) für eine Sägeblatthalterung (10) nach einem der vorstehenden Ansprüche 1 bis 8, mit einem eine Sägekante (27) aufweisenden Sägeabschnitt, wobei der Befestigungsbereich einen Einschnitt (28) zwischen zwei Schenkeln (34 und 36) aufweist, wobei in den beiden Schenkeln (34, 36) punktförmige Sicken (70) vorgesehen sind.
